# EUROPEAN PATENT APPLICATION

(11) **EP 2 131 358 A1**
(43) Date of publication of application: **09.12.2009**
(21) Application number: 08157662.1
(22) Date of filing: 05.06.2008
(51) Int. Cl.: G11B 7/24, G11B 7/007

(54) **Recordable optical storage medium comprising a data layer with a super-resolution near-field structure and respective recorder**

(71) Applicant: Deutsche Thomson OHG, 30625 Hannover (DE)
(72) Inventor: Knittel, Joachim, 78532 Tuttlingen (DE)
(74) Representative: Arnold, Klaus-Peter

(57) **Abstract**

The recordable optical storage medium (10) comprises a substrate layer (11) with a land/grove structure, a data layer (12) disposed on the substrate layer (11), and a section with control data for a recorder for the operation of the storage medium (10), wherein the data layer (12) comprises a super-resolution near-field structure, and the control data specify the data layer (12) as a recordable data layer and provide an information for the recorder to use a laser with a light intensity for changing permanently optical properties of the a super-resolution near-field structure, when writing marks (14) on the data layer (12). The laser power of the recorder is in particular adjusted such, that the super-resolution near-field structure properties of the data layer (12) are destroyed. Suitable materials for the data layer (12) are for example phase change materials and semiconductor materials, e.g. InSb.

## Description

### TECHNICAL FIELD OF THE INVENTION

The present invention relates to an optical storage medium comprising a substrate layer with a land/groove structure, a data layer disposed on the substrate layer, and a section with control data for a respective recorder for the operation of the storage medium.

### BACKGROUND OF THE INVENTION

Optical storage media are media in which data are stored in an optically readable manner, for example by means of a laser and a photodetector being integrated within an optical pickup. The photodetector is used for detecting the reflected light of the laser beam when reading data from the storage medium. In the meanwhile a large variety of optical storage media are known, in particular optical discs, which are operated with different laser wavelength, and which have different sizes for providing storage capacities from below one Gigabyte up to 50 Gigabyte (GB). The formats include read-only media, write-once optical media, as well as rewritable formats. Digital data are stored on these media along tracks in one or more layers of the media.

The storage medium with the highest data capacity is at present the Blu-ray disc (BD), which allows to store up to 50 GB on a dual layer disc. For reading and writing of a Blu-ray disc an optical pickup with a laser wavelength of 405 nm is used. On the Blu-ray disc a track pitch of 320 nm and a mark length from 2T to 8T and 9T is used, where T is the channel bit length, and which corresponds with a minimum mark length of 138 - 160 nm. Further information about the Blu-ray disc system is available for example from the Blu-ray group via internet: www.blu-raydisc.com.

New optical storage media with a super resolution near-field structure (Super-RENS) offer the possibility to increase the data density of the optical storage medium by a factor of two to four in one dimension as compared with the Blu-ray disc. This is possible by a so-called super resolution or Super-RENS layer, which is placed above a data layer of the optical storage medium, and which significantly reduces the effective size of a light spot used for reading from or writing to the optical storage medium. The Super-RENS layer is also called a mask layer because it is arranged above the data layer and for some specific materials only the high intensity center part of a laser beam can penetrate the mask layer. Further, materials can be used for the mask layer, which show a higher reflectivity in the center part of the focused laser beam, e.g. InSb shows this nonlinear optical property. Therefore, the Super-RENS effect allows to record and read data stored in marks of an optical disc, which have a size below the resolution limit of a pickup used for reading or writing the data on the disc.

A super-resolution near-field technique for recording and retrieving small marks beyond the optical diffraction limit is described for example by Tominaga, Nakano and Atoda in "An approach for recording and readout beyond the diffraction limit with an Sb thin film", Applied Physics Letters, Vol. 73, No. 15, 12 October 1998, which describe to use an Sb thin film as a super resolution layer.

In "Sub-Terabyte-Data Capacity Optical Discs Realized by Three Dimensional Pit Selection" by Shintani et al, Japanese Journal of Applied Physics, Vol. 45, No. 4A, 2006, pp. 2593 - 2597, an optical disc is described providing a sub-Terabyte data capacity by using a multilayer disc, for which super resolution can be obtained by using a three dimensional pit selection method for the read-out of data. Reading of data could be obtained for mark pitches far less than the optical resolution limit, which is considered to be due to the change of the refractive index of phase change pits caused by melting of the pits.

In US 2005/0157631 an optical storage medium is described which comprises a read only data region, for which a super resolution is required for reading, and a control data region with control data being included in a part of the lead-in region to provide specific information about the storage medium.

### SUMMARY OF THE INVENTION

The invention relates to a recordable optical storage medium comprising a substrate layer with a land/groove structure, a data layer disposed on the substrate layer and a section with control data for a respective recorder for the operation of the storage medium, wherein the data layer comprises a super-resolution near-field structure. The control data specify the data layer as a recordable data layer for recording of data and provide an information to use a laser power being sufficient for writing marks or spaces by destroying respective parts of the data layer, in particular of the super-resolution near-field structure. The laser power is selected according to the control data so that a respective recorder provides a laser power being sufficiently high for changing permanently optical properties of the data layer, to utilize the optical storage medium as a write once storage medium. The laser power is in particular selected such, that the super-resolution near-field structure properties of the data layer are destroyed.

The properties of the super-resolution near-field structure are therefore destroyed on the locations, where the pickup illuminates the data layer, when recording marks and spaces on the data layer. Suitable materials for the data layer can be for example a semiconductor material, in particular InSb, or a phase change material, e.g. GeSbTe or AlInSbTe. From these materials it is known that the super-resolution near-field structure properties can be destroyed when the laser power is sufficiently high.

Semiconductor materials in particular have a low transmittance in the visible wavelength range and are therefore effectively heated when illuminated with a laser beam. It has been found that for example for InSb, already at intermediate power, in a range of 70% to 90% of the threshold power for providing the super resolution effect of the InSb, the InSb optical properties are damaged such, that a re-writable operation is no more possible.

Also when a phase change material is used for the data layer, the phase change material can be heated by a laser such, that the phase change material is effectively damaged and any rewritable operation is no more possible. The laser power can be adjusted further such, that only in a small inner region of the light spot, as provided by a laser of an optical pickup on the storage medium, the temperature is sufficient for destroying the material. This allows to record marks on the optical storage medium below the optical resolution limit of a pickup of a respective recorder.

### BRIEF DESCRIPTION OF THE DRAWINGS

Preferred embodiments of the invention are explained in more detail below by way of example with reference to schematic drawings, which show:
- Fig. 1: an optical storage medium comprising a mask layer with a super-resolution near-field structure according to prior art;
- Fig. 2: an optical storage medium comprising a data layer with a super-resolution near-field structure for recording of data according to the invention;
- Fig. 3: the optical storage medium of figure 2 showing the data layer with recorded marks; and
- Fig. 4: a simulation showing the resolution increase of the optical storage medium according to the invention with regard to a prior art storage medium.

### DETAILED DESCRIPTION OF PREFERRED EMBODIMENTS

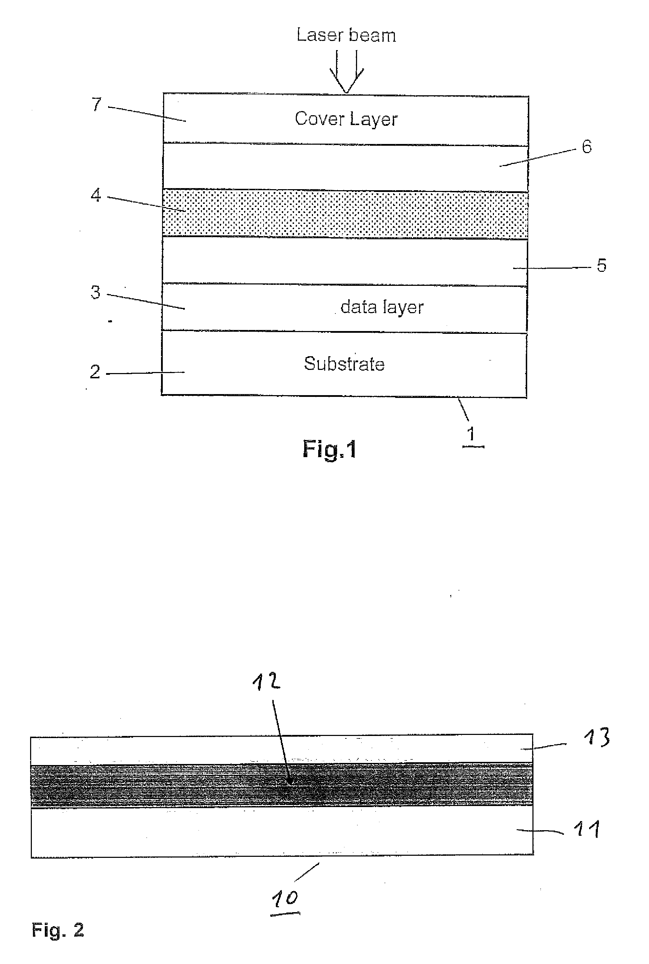

In Fig. 1 an optical storage medium 1 according to prior art is shown in a cross section comprising a mask layer 4 with a super-resolution near-field structure (Super-RENS). The storage medium 1 comprises further a substrate layer 2, on which a data layer 3 is arranged, the data layer comprising for example a pressed pit structure in case of a read-only storage medium. Between the mask layer 4 and the data layer 3 a first dielectric layer 5 is arranged as a protection layer. In addition, a reflective metallic layer, for example an aluminum layer, not shown in figure 1, may be arranged between the dielectric layer 5 and the data layer 3. The Super-RENS layer 4 is called a mask layer because it is arranged above the data layer 3 and for some specific Super-RENS materials only the high intensity center part of a laser beam can penetrate the Super-RENS layer 4. The optical storage medium 1 is in particular an optical disc having a size similar to DVDs and CDs.

The optical storage medium 1 comprises further a cover layer 7 as a protection of the storage medium 1 and a second dielectric layer 6 arranged between the cover layer 7 and the Super-RENS layer 4. For reading the data of the data layer 3, a laser beam is applied to the top of the storage medium 1, penetrating first the cover layer 7, as indicated. The first and second dielectric layers 5, 6 comprise for example the material ZnS-SiO₂ as a protection for the Super-RENS layer 4. The substrate 2 and the cover layer 7 may consist of a plastic material, as known from DVDs and CDs.

In case of a read-only storage medium, the optical storage medium 1 comprises read only data arranged in essentially parallel tracks of the data layer 3. The read only data comprise for example user data and control data as known from prior art optical discs and are arranged in one or several spirals beginning at the inside and ending at the outside of the storage medium 1. The optical storage medium 1 may be arranged also as a recordable disc. In this case the substrate layer 2 comprises a land/grove structure for providing tracking information for a corresponding optical pickup of a respective recorder, and the recording of data is performed by writing marks and spaces on the lands and/or the grooves of the data layer 3.

A recordable optical storage medium 10 according to the invention is shown in a simplified cross section in figure 2. The storage medium 10 comprises a substrate layer 11 with a land/groove structure and a data layer 12 with a super-resolution near-field structure (Super-RENS) disposed on the substrate layer 11. The storage medium 10 may comprise in addition a first dielectric layer between the substrate layer 11 and the data layer 12 and a second dielectric layer between the data layer and a cover layer 13 as a protection for the data layer 12, similar to the dielectric layers shown in figure 1.

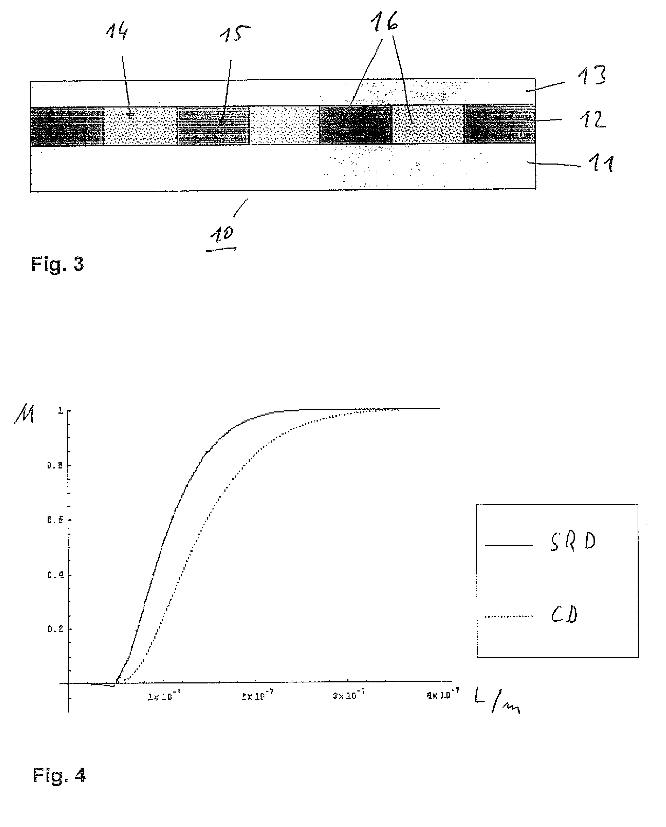

The Super-RENS layer 12 is therefore not used as a mask layer for a respective data layer, but is itself used as a recordable data layer, by utilizing optical properties of the Super-RENS material. As the Super-RENS material for example a semiconductor material, e.g. InSb, or a phase change material like GeSbTe may be used. Data are written on the storage medium 10 by using an optical pickup of a respective recorder providing a laser power, which is sufficient for destroying optical properties of the Super-RENS material. In figure 3, the storage medium 10 of figure 2 is shown in the same cross section comprising a data layer 12, on which marks 14 and spaces 15 are recorded on a track 16 by the laser of the pickup. In the locations of the marks 14 of track 16, optical properties of the Super-RENS material are permanently changed by the laser, for example the reflection factor or the crystalline structure.

For the semiconductor material InSb it is known that the Super-RENS effect can be destroyed by a laser already at an intermediate power of about 70 % to 90% of the threshold power for providing the super resolution near field effect of InSb. In this power range the reflection of InSb is relatively low and comes therefore with a high absorption, which leads to a strong heating of the material and finally to the destruction of the crystalline structure, changing therefore permanently the optical properties of the InSb, in particular the reflection factor.

As an alternative, the data layer 12 may comprise a phase change material, for example GeSbTe, as the Super-RENS material. It is known from phase change materials, that their optical properties can be destroyed permanently, when a sufficiently high laser power is used, for example a laser power larger than 4 mW.

When recording data with a respective pickup of a recorder on the recordable optical storage medium 10, tracks 16 comprising destroyed locations representing marks 14, separated by spaces 15, are recorded by the laser, as shown in figure 3. The size of the marks 14 may correspond essentially with the light spot, as provided by the laser on the data layer 12, depending on the laser power. Alternatively, in a preferred embodiment, the laser power is adjusted such, that only for the inner part of the location, on which the light spot of the laser impinges on the data layer, the optical properties of the Super-RENS material are destroyed, but not in the outer part of the light spot. This can be easily done because the inner part of the light spot is illuminated with the highest light intensity, and therefore the heat is essentially concentrated in the inner part of the location, as illuminated by the laser light. By selecting a suitable laser power, therefore marks 14 can be recorded, which are below the optical resolution limit of the corresponding pickup.

When recording marks 14, in particular also the thickness of the data layer 12 may change, when the optical properties of the Super-RENS material are destroyed, because it can be assumed that the crystalline structure of the Super-RENS material changes. The thickness of the Super-RENS layer may be selected therefore advantageously such, that the marks 14 recorded on the data layer 12 have an optical thickness of about lambda, for example lambda +/- 25%. This will increase the modulation of the data signal due to the Fabry Perrot effect, because the reflectivity of the spaces 15 will be lower as compared with the marks 14.

The recordable optical storage medium 10 comprises further a section with control data, which specify the data layer 12 as a recordable data layer for a respective recorder, the control data including a specific information for the recorder to use a laser power being sufficient for changing permanently optical properties of the data layer, when writing marks 14 on the data layer. The section with the control data may be arranged for example at an inner part of the storage medium, e.g. at the beginning of a track on the storage medium, as known from DVDs and Blu-ray discs.

A recorder being designed for operation with the storage medium 10 therefore does not need any specific additional hardware. The pickup of the recorder may be designed therefore similar to a pickup as used in present Blu-ray recorders, having for example a numerical aperture of 0,85 and a laser having a laser wavelength in the range of 400 - 420 nm.

In figure 4 simulation results of a normalized modulation signal M versus size of recorded marks of a storage medium 10 of figure 3 and a conventional disc not using a Super-RENS effect are shown. The results demonstrate the resolution increase of the storage medium 10 as compared with the conventional disc. The modulation M=(I_on - I_off) / (I)on + I_off) is shown versus the mark length L with I_on = Intensity on the detector for laser beam on pit, and I_off = Intensity on the detector for laser beam between two marks. The modulation signal M is normalized to 1 for the largest mark size. The graph SRD for the storage medium 10 of the invention shows a clear increase of the modulation M for mark lengths below 200 nm with regard to the graph CD of the conventional disc. Provided that a minimum modulation of 0.1 is needed, the proposed disc reduces the minimum mark size by about 20% leading to a capacity increase of 20%.

The resolution increase depends on the nonlinear properties of the Super-RENS material and the values chosen here are only for illustration of the principle. In particular higher capacity gains are possible. Used for the simulation are the following parameters: refractive indices for the conventional disc n_ mark=2, n_ space=1 and for the Super-RENS disc n_ mark=2-exp(-2 I), n_space=1 with I = intensity of the laser beam. A pickup with a numerical aperture of 0.85 and a wavelength of 405 nm is taken into account.

Also other embodiments of the invention can be made by a person skilled in the art without departing from the spirit and scope of the present invention. The recorder according to the invention is in particular not limited to a pickup comprising a Blu-ray disc type pickup. The invention resides therefore in the claims herein after appended.

## Claims

1. Recordable optical storage medium (10) comprising
a substrate layer (11) with a land/grove structure,
a data layer (12) disposed on the substrate layer (11), and
a section with control data for a recorder for the operation of the storage medium (10),
**characterized in that**
the data layer (12) comprises a super-resolution near-field structure, and
the control data specify the data layer (12) as a recordable data layer and provide an information for the recorder to use a laser with a light intensity for changing permanently optical properties of the a super-resolution near-field structure, when recording marks (14) on the data layer (12).

2. The optical storage medium of claim 1, **wherein** the super-resolution near-field structure properties of the locations of the data layer (12) corresponding with the marks (14) are destroyed, when recording marks (14) on the data layer (12).

3. The storage medium of claim 1 or 2, **wherein** the control data comprise the information to use a laser power for recording of marks, which have a size below the optical resolution limit of a corresponding optical pickup of the recorder, by adjusting the laser power such, that the laser power is sufficient for changing permanently optical properties of the data layer (12) only for the inner part of the location, on which the light spot of the laser impinges on the data layer (12).

4. The optical storage medium of claim 1, 2 or 3, **wherein** the data layer (12) comprises a semiconductor material as the super-resolution near-field structure.

5. The optical storage medium of claim 4, **wherein** the semiconductor material is InSb and the laser power for recording marks (14) on the storage medium (10) is within a range of 70% - 90% of the threshold power for providing the super-resolution near-field effect for InSb.

6. The optical storage medium of claim 1, 2 or 3, **wherein** the data layer (12) comprises a phase change material as the super-resolution near-field structure.

7. The optical storage medium of claim 6, **wherein** the phase change material comprises GeSbTe and the laser power for recording marks on the data layer (12) is **above 4 mW. ??**

8. The optical storage medium according to one of the preceding claims, **wherein** the optical storage medium (10) comprises a protection layer (13), a first dielectric layer as a protection layer between the substrate layer (11) and the data layer (12) and a second dielectric layer as a protection layer between the data layer (12) and the cover layer (13).

9. The optical storage medium according to one of the preceding claims, wherein the damaged locations of the mask layer have an optical thickness of lambda +/- 25%, with lambda being the laser wavelength.

10. The optical storage medium according to one of the preceding claims, **wherein** the recording power of the laser is adjusted such, that the reflection and/or the crystalline structure of the locations of the nonlinear data layer (12), on which marks (14) are recorded, is permanently changed by the laser.

11. Recorder comprising an optical pick-up for the operation of an optical storage medium according to one of the claims 1- 10, the recorder being designed for reading the control data of the storage medium (10) and adjusting the recording power of the laser to a value sufficiently high for recording user data by destroying regions representing marks (14) of the data layer (12) on the optical storage medium (10).

12. The recorder of claim 9, **wherein** the optical pickup has a numerical aperture of 0,85 and comprises a laser diode providing a wavelength in the range of 400 - 420 nm.
